# FASCICULE DE BREVET EUROPEEN

(11) **EP 1 846 331 B1**
(45) Date de publication et mention de la délivrance du brevet: **17.05.2017**
(21) Numéro de dépôt: 06709499.5
(22) Date de dépôt: 10.02.2006
(51) Int. Cl.: C01G 45/12, C01G 51/00, H01M 4/48, H01M 4/50, H01M 4/52, C01G 53/00, H01M 4/525, H01M 4/505, H01M 10/0525

(54) **PROCEDE DE MODIFICATION D'UN OXYDE LITHIE COMPRENANT AU MOINS UN METAL DE TRANSITION UTILISANT DES IONS DE PHOSPHATE**
VERFAHREN ZUR MODIFIZIERUNG EINES MINDESTENS EIN ÜBERGANGSMETALL ENTHALTENDEN LITHIIERTEN OXIDS MITTELS PHOSPHATIONEN
METHOD FOR MODIFICATION OF A LITHIATED OXIDE COMPRISING AT LEAST ONE TRANSITION METAL USING PHOSPHATE IONS

(30) Priorité: 11.02.2005 FR 0550406
(43) Date de publication de la demande: 24.10.2007
(73) Titulaire: Commissariat à l'Énergie Atomique et aux Énergies Alternatives, 75015 Paris (FR)
(72) Inventeur: JOUANNEAU, Séverine, 38590 SILLANS (FR); LE CRAS, Frédéric, F-38470 Notre-Dame-De-L'Osier (FR); BOURBON, Carole, F-38590 Saint Michel de Saint-Geoirs (FR)
(74) Mandataire: Ahner, Philippe
(86) Numéro de dépôt international: PCT/FR2006/050120
(87) Numéro de publication internationale: WO 2006/085036

(56) Documents cités:
- EP-A1- 1 267 431
- US-A1- 2004 206 938
- PATENT ABSTRACTS OF JAPAN vol. 2003, no. 12, 5 décembre 2003 (2003-12-05) & JP 2003 338321 A (CENTRAL RES INST OF ELECTRIC POWER IND; NATIONAL INSTITUTE OF ADVANCED), 28 novembre 2003 (2003-11-28)
- SUN Y-K ET AL: "Surface structural change of ZnO-coated LiNi0.5Mn1.5O4 spinel as 5 V cathode materials at elevated temperatures" ELECTROCHIMICA ACTA, ELSEVIER SCIENCE PUBLISHERS, BARKING, GB, vol. 48, no. 5, 15 janvier 2003 (2003-01-15), pages 503-506, XP004401302 ISSN: 0013-4686 cité dans la demande
- A. EFTEKHARI: "Improving Cyclybility of 5V Cathodes by Electrochemical Surface Modification" CHEMISTRY LETTERS, vol. 33, no. 5, 2004, pages 616-617, XP002355418
- PATENT ABSTRACTS OF JAPAN vol. 2003, no. 12, 5 décembre 2003 (2003-12-05) & JP 2003 308842 A (SHIN KOBE ELECTRIC MACH CO LTD), 31 octobre 2003 (2003-10-31)

## Description

### DOMAINE TECHNIQUE

La présente invention a trait à un procédé de modification chimique d'un oxyde lithié comprenant au moins un métal de transition lithié, cet oxyde lithié pouvant être utilisé avantageusement comme matériau actif d'électrode, et plus particulièrement comme matériau actif d'électrode positive pour accumulateur au lithium.

Le domaine général de l'invention est donc celui des accumulateurs au lithium.

Les accumulateurs au lithium ont fait l'objet de nombreux développements du fait de leurs bons résultats obtenus en matière de tension, de densités d'énergie massique et volumique, par rapport aux accumulateurs au plomb ou encore du type Nickel-Cadmium (Ni-Cd) ou Nickel-Hydrure métallique (Ni-MH).

De part ces caractéristiques très attractives, les accumulateurs au lithium trouvent leur application dans de nombreux domaines, notamment dans l'alimentation des systèmes embarqués de faible épaisseur, comme les cartes de crédit, les étiquettes intelligentes, dans l'alimentation des téléphones mobiles ou encore dans l'alimentation des véhicules électriques.

### ÉTAT DE LA TECHNIQUE ANTÉRIEURE

Les accumulateurs au lithium fonctionnent sur le principe d'insertion-désinsertion (ou intercalation-désintercalation) du lithium sur au moins une électrode.

Plus précisément, à chaque charge ou décharge de l'accumulateur, du lithium sous forme ionique (Li⁺) est échangé entre les électrodes positive et négative. La quantité d'énergie échangée (fournie par l'accumulateur en décharge ou fournie à l'accumulateur en charge) à chaque charge ou décharge est exactement proportionnelle à la quantité de lithium qu'il est possible d'échanger au cours de la réaction électrochimique.

Les matériaux actifs d'électrode positive sont généralement des céramiques oxydes à base de lithium, telles que LiCoO₂, LiNiO₂ et LiMn₂O₄ ou encore des oxydes plus complexes tels que LiNi_{0,5}Mn_{1,5}O₄. Le phénomène d'insertion-désinsertion du lithium dans ces matériaux intervient à des potentiels de fonctionnement par rapport au lithium métallique de l'ordre de 4 V ou plus. Dans cette gamme de potentiel, il a été constaté une oxydation de l'électrolyte organique avec lequel le matériau actif d'électrode positive est en contact, ce d'autant plus que la surface de contact entre le matériau et l'électrolyte est importante. Ce phénomène d'oxydation entraîne une durée de vie limitée de l'accumulateur et notamment une diminution de la capacité de décharge après un certain nombre de cycles de charge-décharge de l'accumulateur.

Pour limiter ce phénomène d'oxydation de l'électrolyte, deux alternatives peuvent être envisagées.

La première alternative peut consister à diminuer la surface spécifique du matériau actif en augmentant la taille des particules dudit matériau. Toutefois, cette alternative n'est pas intéressante, dans la mesure où elle peut entraîner une diminution des capacités délivrées par l'accumulateur, notamment pour de fortes densités de courant appliquées.

Une deuxième alternative peut consister à minimiser le contact direct entre les particules de matériau actif et l'électrolyte, en élaborant une interface protectrice entre lesdites particules et l'électrolyte.

C'est ainsi que dans l'article paru dans Electrochemica Acta 48 (2003) 503-506, il a été proposé de revêtir les particules de matériau actif d'électrode positive, en l'occurrence LiNi_{0,5}Mn_{1,5}O₄, à l'aide de nanoparticules de ZnO. Les auteurs de cet article ont pu démontrer qu'un accumulateur au lithium comprenant le matériau ainsi modifié conserve sa capacité nominale après 50 cycles alors que le même matériau non modifié perd 90 % de sa capacité nominale après seulement 30 cycles. Toutefois, bien qu'amoindri, le phénomène de dégradation de l'électrolyte par oxydation subsiste.

Le document JP 2003 338321 a trait à un procédé de dépôt sur une électrode positive d'un film d'un électrolyte solide inorganique, de sorte à ce que ce dernier fasse écran entre l'électrode positive et l'électrolyte organique (paragraphe [0007]), cet électrolyte solide inorganique pouvant être LiBFLi₃PO₄, LIPON, Li₂BO₃, Li₂SO₄, LiAlSiO₄, LiPF₆ (paragraphe [0010]. Il est décrit notamment, au paragraphe [0020], qu'un électrolyte solide inorganique Li₃PO₄ est préparé par réaction entre LiNO₃ et H₃PO₄ dans l'éthanol dans des proportions 3 :1, l'équation de la réaction étant ainsi la suivante :

3LiNO₃ + H₃PO₄ → Li₃PO₄ + 3 HNO₃

Le document Electrochimica Acta, vol.48, p.503-506 décrit un matériau de cathode pour batterie secondaire au lithium comprenant une poudre de LiNi_{0,5}Mn_{1,5}O₄ revêtue de ZnO.

Le document Chemistry Letters, vol.33, n°5, 2004, p. 616-617 décrit un procédé de modification de surface d'un matériau de cathode du type LiNi_{0,5}Mn_{1,5}O₄, LiFe_{0,5}Mn_{1,5}O₄ et LiCoPO₄ par dépôt sur ledit matériau d'une couche d'oxyde (par exemple Al₂O₃).

Les Inventeurs se sont fixé comme objectif d'obtenir un accumulateur au lithium présentant une capacité de décharge relativement stable après un nombre de cycles charge-décharge élevé.

Les Inventeurs ont découvert, de manière surprenante, qu'en appliquant un traitement spécifique au matériau actif de l'électrode positive, les accumulateurs incorporant le matériau ainsi traité présentent une stabilité de leurs capacités de décharge en fonction du nombre de cycles de charge-décharge.

Le but de l'invention est donc de fournir un procédé de modification chimique d'un oxyde lithié comprenant au moins un métal de transition utilisable comme matériau actif d'électrode positive, permettant l'obtention d'un oxyde susceptible de limiter le phénomène d'oxydation de l'électrolyte avec lequel il est en contact.

### EXPOSÉ DE L'INVENTION

Ce but est atteint par un procédé de modification chimique d'un oxyde lithié comprenant au moins un métal de transition, comprenant successivement :
- une étape de mise en contact dudit oxyde avec une solution aqueuse comprenant des ions phosphate ;
- une étape de séparation dudit oxyde de la solution aqueuse ;
- une étape de séchage dudit matériau.

Le procédé de l'invention se distingue des procédés de l'art antérieur, par le fait qu'il consiste en une modification chimique de l'oxyde de métal de transition et non en un simple dépôt sur cet oxyde, comme c'est le cas de l'art antérieur.

Le procédé de l'invention est de mise en oeuvre simple, dans la mesure où il fait appel à des réactifs usuels (en l'occurrence, une solution aqueuse comprenant des ions phosphate) et ne nécessite pas de traitement thermique à très haute température comme c'est le cas des procédés de l'art antérieur.

Ainsi, le procédé de l'invention comprend donc tout d'abord une première étape comprenant la mise en contact d'un oxyde lithié comprenant au moins un métal de transition avec une solution aqueuse comprenant des ions phosphate.

On précise que l'étape de mise en contact est réalisée avantageusement pendant une durée appropriée, pour permettre la modification chimique en surface de l'oxyde lithié.

La mise en contact est réalisée, de préférence, sous agitation pendant une durée pouvant aller de 15 minutes à 4 semaines, de préférence de 12 heures à 48 heures.

Selon l'invention, la solution aqueuse comprenant des ions phosphate peut être une solution de dihydrogénophosphate de lithium (LiH₂PO₄), une solution d' hydrogénophosphate de diammonium ((NH₄)₂HPO₄). La solution aqueuse peut comprendre une concentration en ions phosphate allant de 0,025 à 1 mol/L, par exemple égale à 0,1 mol/L.

Cette étape de mise en contact peut être réalisée sous chauffage, par exemple à une température allant jusqu'à 70°C.

L'oxyde lithié comprenant au moins un métal de transition comprend avantageusement du nickel, du manganèse, du fer, du cuivre, du chrome et/ou du cobalt et éventuellement un ou plusieurs éléments choisis parmi Na, Ca, Sr, K, Mg, Nb, Al, Zr, V, Zn, Si, Mo et Ti.

Les oxydes susceptibles d'être utilisés dans le cadre de ce procédé peuvent être choisis notamment parmi LiCoO₂, LiMn₂O₄, LiNi_{0,5}Mn_{1,5}O₄. Un oxyde particulièrement intéressant est LiNi_{0,5}Mn_{1,5}O₄.

Ils se présentent avantageusement sous forme de poudre, notamment une poudre présentant avantageusement une taille de particules allant de 5 à 10 micromètres et une surface spécifique allant de 1 à 2 m²/g.

Les oxydes utilisés dans l'étape de mise en contact peuvent être disponibles commercialement mais peuvent être également préparés préalablement. Les techniques de préparation de tels oxydes sont bien connues de l'homme du métier. On peut citer, parmi les techniques de préparation connue, la technique sol-gel telle que décrite dans Electrochemica Acta 48 (2003) 503-506.

Après cette étape de mise en contact, l'oxyde lithié modifié est séparé de la solution aqueuse comprenant des ions phosphate. Cette étape de séparation peut être mise en oeuvre par toutes techniques de séparation liquide/solide.

Parmi les techniques de séparation pouvant être mises en oeuvre dans le cadre de ce procédé, on peut citer la filtration, la centrifugation.

Une fois séparé de la solution aqueuse, l'oxyde lithié modifié ainsi peut être amené à subir une ou plusieurs étapes de rinçage avec de l'eau, de préférence ultra pure, et/ou avec un alcool aliphatique, tel que l'éthanol.

Après l'étape de séparation et l'éventuelle étape de rinçage, l'oxyde subit une étape de séchage, par exemple, en plaçant l'oxyde dans une étuve à une température de 50 à 100°C, par exemple à 60°C. Avantageusement, l'oxyde subit au final, afin de finaliser l'étape de séchage, une étape de traitement thermique à une température allant de 100 à 500°C, par exemple 350°C pendant une durée allant de 2 à 5 heures.

L'oxyde lithié comprenant au moins un métal de transition obtenu par le procédé de l'invention se distingue des composés de l'art antérieur par le fait qu'il comporte des groupements PO₄ liés en surface aux atomes de métal constitutifs de l'oxyde. Il présente donc une composition chimique modifiée en surface par rapport à un oxyde lithié non traité.

L'oxyde lithié comprenant au moins un métal de transition, une fois incoporé dans un matériau d'électrode positive d'accumulateur au lithium, protège l'électrolyte, avec lequel il est en contact, du phénomène d'oxydation et permet ainsi la mise en oeuvre, dans l'accumulateur, d'un nombre de cycles charge-décharge élevé sans diminution notable de la capacité de décharge.

Comme mentionné précédemment, cet oxyde est destiné tout particulièrement à entrer dans la constitution de l'électrode positive d'un accumulateur au lithium.

Ainsi, l'oxyde lithié modifié comprenant au moins un métal de transition décrit ci-dessus peut être utilisé en tant que matériau actif d'électrode, plus précisément en tant que matériau actif d'électrode positive.

L'oxyde modifié peut se retrouver sous forme de particules, de préférence de nanoparticules, dispersées dans une matrice conductrice de l'électricité.

Cette matrice conductrice de l'électricité comprend généralement un additif conducteur de l'électricité et un liant organique.

Parmi les additifs conducteurs de l'électricité susceptibles d'être utilisés, on peut citer le carbone.

Parmi les liants organiques susceptibles d'être utilisés, on peut citer des polymères organiques choisis parmi :
- les polyéthers ;
- les polyesters ;
- les polymères résultant de la polymérisation du méthacrylate de méthyle, l'acrylonitrile, le fluorure de vinylidène et les mélanges de ceux-ci.

L'oxyde lithié modifié peut entrer dans la constitution d'un accumulateur au lithium comprenant au moins une cellule comprenant :
- une électrode positive comprenant un oxyde lithié modifié comprenant au moins un métal de transition tel que défini précédemment ;
- une électrode négative ;
- un électrolyte conducteur d'ions lithium disposé entre ladite électrode positive et ladite électrode négative.

L'électrode négative peut être, par exemple, de manière classique soit une électrode négative comprenant un composé d'insertion du lithium à base de carbone ou un oxyde métallique lithié (dans le cas des accumulateurs appartenant à la filière lithium-ion) soit une électrode négative en lithium ou en alliage de lithium tel que des alliages avec Sn, Si, Ge, Al (dans le cas des accumulateurs appartenant à la filière lithium-métal).

Généralement, l'électrolyte se présente sous forme d'électrolyte liquide imprégnant un matériau poreux.

L'électrolyte liquide comporte généralement un solvant choisi dans un groupe constitué par les carbonates, les éthers et les mélanges de ceux-ci, et un sel de lithium dissous dans ce solvant.

A titre d'exemples de carbonate, on peut citer le carbonate d'éthylène, le carbonate de propylène, le diméthylcarbonate ou le diéthylcarbonate.

A titre d'exemples d'éther, on peut citer le diméthoxyéthane, le dioxolane, le dioxane.

Comme sel de lithium, on peut citer LiPF₆, LiClO₄, LiBF₄, LiAsF₆, LiCF₃SO₃, LiN(CF₃SO₂)₃, LiN(C₂F₅SO₂).

Pour un même nombre de cycles de charge-décharge, les accumulateurs au lithium comprenant un oxyde modifié selon l'invention présentent une perte en capacité de décharge beaucoup moins importante que les accumulateurs comprenant un oxyde non modifié. Les accumulateurs au lithium selon l'invention, présentent une plus longue durée de vie et sont de ce fait économiquement plus attractifs.

D'autres caractéristiques et avantages de l'invention apparaîtront mieux à la lecture des exemples qui suivent, donnés à titre illustratif et non limitatif en référence aux dessins annexés.

### BRÈVE DESCRIPTION DES DESSINS

La figure 1 est un graphique représentant l'évolution de la capacité de décharge C (exprimée en mA.h/g) en fonction du nombre de cycles N.
La figure 2 est un graphique représentant le pourcentage de perte en capacité de décharge (en échelle logarithmique) par cycle (%) en fonction du temps de séjour t (en minutes) d'un oxyde LiNi_{0,5}Mn_{1,5}O₄ dans une solution de LiH₂PO₄.
La figure 3 est un graphique représentant l'évolution de la capacité de décharge C (exprimée en mA.h/g) en fonction du nombre de cycles N pour un oxyde ayant séjourné dans une solution de LiH₂PO₄ pendant 48 heures.

### EXPOSÉ DÉTAILLÉ DE MODES DE RÉALISATION PARTICULIERS

Les exemples suivants illustrent la modification chimique d'un oxyde lithié comprenant au moins un métal de transition selon le procédé de l'invention et la mise en oeuvre des oxydes ainsi modifiés dans un accumulateur au lithium comme matériau actif d'électrode positive.

### EXEMPLE 1

Du LiNi_{0,5}Mn_{1,5}O₄ est préparé par mélange intime de carbonate de lithium, de nickel et de manganèse mélangés dans des proportions stoechiométriques, suivi d'un traitement thermique (10 heures à 900°C) et d'un lent refroidissement (1°/min).

Un gramme de LiNi_{0,5}Mn_{1,5}O₄ préalablement préparé est plongé dans 50 mL d'une solution aqueuse 0,1 M de LiH₂PO₄ et placé sous agitation pendant 48 heures à température ambiante.

Après centrifugation et rinçages successifs à l'eau puis à l'éthanol, un séchage à 60°C durant un week-end est réalisé. Un traitement thermique à 350°C pendant trois heures est enfin effectué.

### EXEMPLE 2.

Un gramme de LiNi_{0,5}Mn_{1,5}O₄ préalablement préparé à 900°C est plongé dans 50 mL d'une solution aqueuse 0,1 M de (NH₄)₂HPO4 et placé sous agitation pendant 24 heures à température ambiante.
Après centrifugation et rinçages successifs à l'eau puis à l'éthanol, un séchage à 60°C durant un week-end est réalisé. Un traitement thermique à 350°C pendant trois heures est enfin effectué.

### EXEMPLE 3

L'oxyde modifié de métal de transition lithié préparé dans l'exemple 1 est incorporé dans un accumulateur lithium-métal comprenant :
* une électrode négative constituée d'un disque de lithium (diamètre 16 mm, épaisseur 130 microns) déposé sur un disque de nickel servant de collecteur de courant ;
* une électrode positive constituée d'un disque de 14 mm prélevé sur un film composite de 50 microns d'épaisseur comprenant l'oxyde de l'invention préparé selon l'exemple 1 (80% en masse), du noir de carbone (8% en masse) comme matériau conducteur et de l'hexafluorure de polyvinylidène (12% en masse) comme liant, le tout étant déposé sur un collecteur de courant en aluminium (feuille de 25 microns d'épaisseur) ; et
* un séparateur imbibé de l'électrolyte liquide LiPF₆ 1M en solution dans du carbonate de propylène.

A 25°C, cet accumulateur délivre une capacité de 137 mAh/g, relativement stable en cyclage à C/5, comme le met en évidence l'exemple 7 ci-dessous.

### EXEMPLE 4

L'oxyde modifié de métal de transition lithié préparé dans l'exemple 2 est incorporé dans un accumulateur lithium-métal comprenant :
* une électrode négative composite comprenant le matériau actif Li₄Ti₅O₁₂ (80% en masse), du noir de carbone (8% en masse) comme matériau conducteur de l'électricité et de l'hexafluorure de polyvinylidène (12% en masse) comme liant organique, le tout étant déposé sur un collecteur de courant en aluminium ;
* une électrode positive composite comprenant l'oxyde décrit dans l'invention, préparé selon l'exemple 2, les autres constituants étant conformes à ceux décrits dans l'exemple 3; et
* un séparateur imbibé d'électrolyte liquide constitué de LiPF₆ 1M en solution dans du carbonate de propylène. Les performances sont semblables à celles décrites dans l'exemple 3.

### EXEMPLE 5

Cet exemple vise à démontrer l'évolution de la capacité de décharge en fonction du nombre de cycles charge-décharge que subissent des accumulateurs au lithium comportant une électrode positive à base de LiNi_{0,5}Mn_{1,5}O₄ modifié ou non selon le procédé de l'invention.

Pour ce faire, dans un premier temps, différents oxydes modifiés ont été préparés selon l'exemple 1 en faisant varier le temps de contact avec la solution aqueuse de LiH₂PO₄ (respectivement 15 minutes, 1 heure, 1 heure 50, 5 heures, 24 heures et 48 heures).

Les oxydes ainsi modifiés sont incorporés chacun dans un accumulateur de lithium conformément à l'exemple 3.

Parallèlement, un accumulateur comprenant un oxyde de métal de transition lithié non modifié a été également préparé selon le même mode opératoire que l'exemple 3.

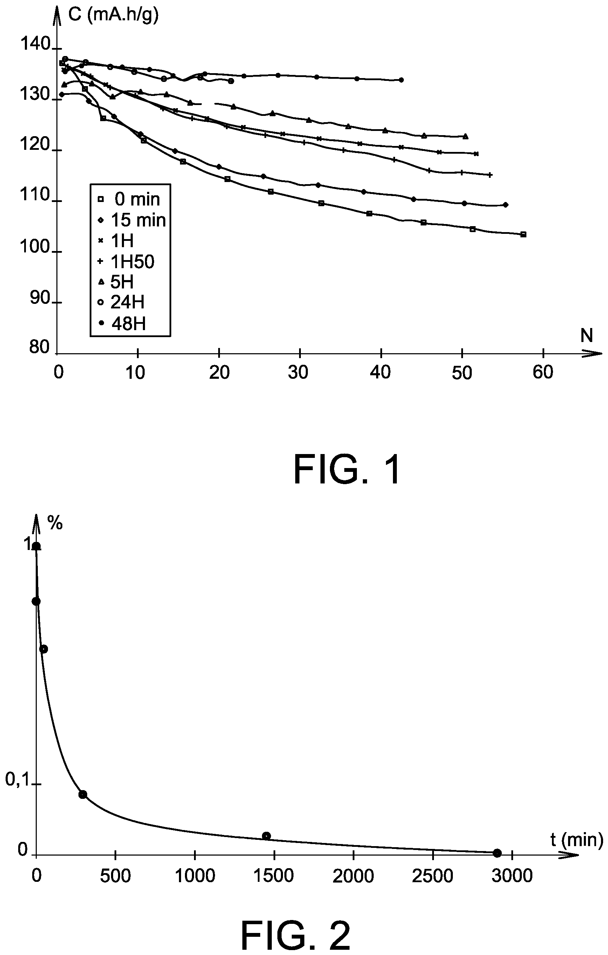

Chaque accumulateur comportant un oxyde modifié ou non est soumis à une succession de cycles charge-décharge en régime C/5 (charge et décharge durant 5 heures). A chaque fin de cycle, il est procédé à une mesure de la capacité de décharge de l'accumulateur. Les résultats sont regroupés sur la figure 1.

Il apparaît clairement à la vue de cette figure que :
- un accumulateur au lithium comportant un oxyde modifié conforme à l'invention présente une diminution de sa capacité de décharge en fonction du nombre de cycles plus faible qu'un accumulateur comportant un oxyde non modifié ;
- la diminution de la capacité de décharge est d'autant plus faible que l'oxyde modifié incorporé dans l'accumulateur a été mis en contact avec une solution aqueuse de LiH₂PO₄ plus longtemps ;
- un accumulateur comportant un oxyde modifié conforme à l'invention (temps de contact avec la solution aqueuse de LiH₂PO₄ de 48 heures) présente une quasi stabilité de la capacité de décharge en fonction du nombre de cycles.

On peut noter également que le temps de séjour de LiNi_{0,5}Mn_{1,5}O₄ dans LiH₂PO₄ n'affecte pas en soi la valeur de la capacité nominale (c'est-à-dire la capacité initiale).

### EXEMPLE 6

Cet exemple met en évidence la perte en capacité de décharge par cycle de charge-décharge pour des accumulateurs au lithium comportant du LiNi_{0,5}Mn_{1,5}O₄ modifié ou non.

Pour ce faire, dans un premier temps, différents oxydes modifiés selon l'invention ont été préparés selon l'exemple 1 en faisant varier le temps de contact avec la solution aqueuse de LiH₂PO₄ (respectivement 15 minutes, 1 heure, 5 heures, 24 heures, 48 heures).

Les oxydes modifiés ou non sont incorporés chacun dans un accumulateur de lithium conformément au mode opératoire de l'exemple 3.

Chaque accumulateur comportant un oxyde modifié ou non donné est soumis à une succession de cycles charge-décharge au régime C/5. A la fin de chaque cycle, il est procédé à une mesure de la capacité de décharge (en mA.h/g). On détermine ensuite pour chacun des accumulateurs la perte moyenne de capacité de décharge par cycle.

Les résultats sont regroupés sur la figure 2.

Il ressort de cette figure que des accumulateurs au lithium comportant comme matériau actif d'électrode positive un oxyde modifié conformément à l'invention présente une perte de capacité de décharge par cycle plus faible que les accumulateurs au lithium comportant comme matériau actif d'électrode positive un oxyde non modifié.

Plus précisément, un accumulateur au lithium comportant LiNi_{0,5}Mn_{1,5}O₄ non modifié présente une perte moyenne de capacité de décharge par cycle de l'ordre de 1% alors qu'un accumulateur au lithium comportant du LiNi_{0,5}Mn_{1,5}O₄ modifié (temps de contact avec LiH₂PO₄ supérieur ou égal à 300 minutes) présente une perte moyenne de capacité de décharge par cycle inférieure à 0,1%.

### EXEMPLE 7

Cet exemple détermine la perte en capacité de décharge par cycle pour un accumulateur de l'exemple 3 (comprenant LiNi_{0,5}Mn_{1,5}O₉ modifié par un temps de contact de 48 heures avec LiH₂PO₄).

Pour ce faire, l'accumulateur de l'exemple 3 est soumis successivement à 90 cycles de charge/décharge au régime C/5 et il est procédé à la fin de chaque cycle à la mesure de la capacité de décharge.

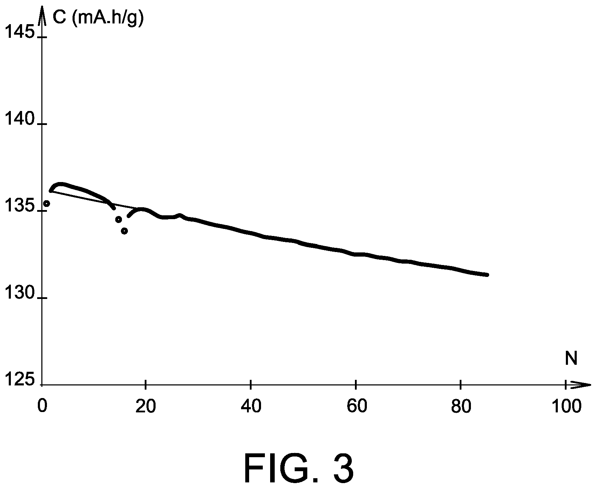

Les résultats sont regroupés sur la figure 3.

L'on peut constater à la vue de cette figure que la capacité de décharge diminue très faiblement.

Il a été mis en évidence que la perte de capacité de décharge par cycle était en moyenne de 0,044 %.

## Revendications

1. Procédé de modification chimique d'un oxyde lithié comprenant au moins un métal de transition, comprenant successivement :
- une étape de mise en contact dudit oxyde avec une solution aqueuse comprenant des ions phosphate ;
- une étape de séparation dudit oxyde de la solution aqueuse ;
- une étape de séchage dudit oxyde.

2. Procédé selon la revendication 1, dans lequel l'étape de mise en contact est réalisée sous agitation pendant une durée pouvant aller de 15 minutes à 4 semaines.

3. Procédé selon la revendication 1 ou 2, dans lequel la solution aqueuse comprenant des ions phosphate est une solution de dihydrogénophosphate de lithium (LiH₂PO₄) ou une solution d'hydrogénophosphate de diammonium ((NH₄)₂HPO₄).

4. Procédé selon l'une quelconque des revendications 1 à 3, dans lequel la solution aqueuse comprenant des ions phosphate présente une concentration en ions phosphate allant de 0,025 à 1 mol.L⁻¹.

5. Procédé selon l'une quelconque des revendications précédentes, dans lequel l'oxyde de métal de transition lithié comprend du nickel, du manganèse, du fer, du cuivre, du chrome et/ou du cobalt.

6. Procédé selon la revendication 5, dans lequel l'oxyde de métal de transition lithié comprend, en outre, un ou plusieurs éléments choisis parmi Na, Ca, Sr, K, Mg, Nb, Al, Zr, V, Zn, Si, Mo, Ti.

7. Procédé selon l'une quelconque des revendications 1 à 5, dans lequel l'oxyde de métal de transition lithié est choisi parmi LiCoO₂, LiMn₂O₄, LiNi_{0,5}Mn_{1,5}O₄.

8. Procédé selon l'une quelconque des revendications précédentes, dans lequel l'oxyde de métal de transition lithié se présente sous forme de poudre.

9. Procédé selon la revendication 8, dans lequel la poudre présente une taille de particules allant de 5 à 10 micromètres et une surface spécifique allant de 1 à 2 m²/g.

10. Procédé selon l'une quelconque des revendications précédentes, dans lequel l'étape de séparation est effectuée par centrifugation.

11. Procédé selon l'une quelconque des revendications précédentes, dans lequel l'étape de séchage est mise en oeuvre dans un étuve à une température allant de 50 à 100°C.

12. Procédé selon l'une quelconque des revendications précédentes, comprenant, en outre, une étape de traitement thermique à une température allant de 100 à 500°C.

## Patentansprüche

1. Verfahren zur chemischen Modifizierung eines lithiierten Oxids, das wenigstens ein Übergangsmetall umfasst, nacheinander umfassend:
- einen Schritt des Inkontaktbringens des Oxids mit einer wässrigen Lösung, die Phosphationen umfasst;
- einen Schritt der Separation des Oxids von der wässrigen Lösung;
- einen Schritt des Trocknens des Oxids.

2. Verfahren nach Anspruch 1, wobei der Schritt des Inkontaktbringens unter Umrühren während einer Dauer realisiert wird, die von 15 Minuten bis 4 Wochen betragen kann.

3. Verfahren nach Anspruch 1 oder 2, wobei die wässrige Lösung, die Phosphationen umfasst, eine Lösung von Lithium-Dihydrogenphosphat (LiH₂PO₄) oder eine Lösung von Diammonium-Hydrogenphosphat ((NH₄)₂HPO₄) ist.

4. Verfahren nach einem der Ansprüche 1 bis 3, wobei die wässrige Lösung, die Phosphationen umfasst, eine Phosphationenkonzentration aufweist, die von 0,025 bis 1 mol.L⁻¹ beträgt.

5. Verfahren nach einem der vorhergehenden Ansprüche, wobei das lithiierte Übergangsmetalloxid Nickel, Mangan, Eisen, Kupfer, Chrom und/oder Kobalt umfasst.

6. Verfahren nach Anspruch 5, wobei das lithiierte Übergangsmetalloxid ferner ein oder mehrere Elemente umfasst, ausgewählt aus Na, Ca, Sr, K, Mg, Nb, Al, Zr, V, Zn, Si, Mo, Ti.

7. Verfahren nach einem der Ansprüche 1 bis 5, wobei das lithiierte Übergangsmetalloxid ausgewählt ist aus LiCoO₂, LiMn204, LiNi_{0,5}Mn_{1,5}O₄.

8. Verfahren nach einem der vorhergehenden Ansprüche, wobei das lithiierte Übergangsmetalloxid die Form eines Pulvers aufweist.

9. Verfahren nach Anspruch 8, wobei das Pulver eine Partikelgröße aufweist, die von 5 bis 10 Mikrometer beträgt, und eine spezifische Oberfläche, die von 1 bis 2 m²/g beträgt.

10. Verfahren nach einem der vorhergehenden Ansprüche, wobei der Schritt des Separierens durch Zentrifugieren durchgeführt wird.

11. Verfahren nach einem der vorhergehenden Ansprüche, wobei der Schritt des Trocknens in einem Trockenschrank bei einer Temperatur durchgeführt wird, die von 50 bis 100°C beträgt.

12. Verfahren nach einem der vorhergehenden Ansprüche, ferner umfassend einen Schritt der thermischen Behandlung bei einer Temperatur, die von 100 bis 500°C beträgt.

## Claims

1. Method of chemically modifying a lithium-based oxide comprising at least one transition metal, which comprises, in succession:
- a step of bringing said oxide into contact with an aqueous solution comprising phosphate ions;
- a step of separating said oxide from the aqueous solution; and
- a step of drying said oxide.

2. Method according to Claim 1, in which the contacting step is carried out with stirring for a time that may range from 15 minutes to 4 weeks.

3. Method according to Claim 1 or 2, in which the aqueous solution comprising phosphate ions is a lithium dihydrogenphosphate (LiH₂PO₄) solution or a diammonium hydrogenphosphate ((NH₄)₂HPO₄) solution.

4. Method according to any one of Claims 1 to 3, in which the aqueous solution comprising phosphate ions has a phosphate ion concentration ranging from 0.025 to 1 mol/l.

5. Method according to any one of the preceding claims, in which the lithium transition metal oxide comprises nickel, manganese, iron, copper, chromium and/or cobalt.

6. Method according to Claim 5, in which the lithium transition metal oxide further includes one or more elements chosen from Na, Ca, Sr, K, Mg, Nb, Al, Zr, V, Zn, Si, Mo and Ti.

7. Method according to any one of Claims 1 to 5, in which the lithium transition metal oxide is chosen from LiCoO₂, LiMn₂O₄ and LiNi_{0.5}Mn_{1.5}O₄.

8. Method according to any one of the preceding claims, in which the lithium transition metal oxide is in the form of powder.

9. Method according to Claim 8, in which the powder has a particle size ranging from 5 to 10 microns and a specific surface area ranging from 1 to 2 m²/g.

10. Method according to any one of the preceding claims, in which the separation step is carried out by centrifugation.

11. Method according to any one of the preceding claims, in which the drying step is carried out in a drying oven at a temperature ranging from 50 to 100°C.

12. Method according to any one of the preceding claims further including a heat-treatment step at a temperature ranging from 100 to 500°C.
